# EUROPEAN PATENT APPLICATION

(11) **EP 2 799 818 A2**
(43) Date of publication of application: **05.11.2014**
(21) Application number: 14165276.8
(22) Date of filing: 17.04.2014
(51) Int. Cl.: G01C 23/00, G01W 1/02, G01S 13/95

(54) **A system and method for graphically displaying weather hazards in a perspective view**

(30) Priority: 03.05.2013 US 201313886347
(71) Applicant: Honeywell International Inc., Morristown, NJ 07962-2245 (US)
(72) Inventor: Venkataswamy, Sadguni, Morristown, NJ New Jersey 07962-2245 (US); Balasa, Swetha, Morristown, NJ New Jersey 07962-2245 (US); Veerabhadraiah, Shashidhara, Morristown, NJ New Jersey 07962-2245 (US); Yattukallu, Shyma Prakash, Morristown, NJ New Jersey 07962-2245 (US)
(74) Representative: Houghton, Mark Phillip

(57) **Abstract**

A system and method are provided for graphically displaying a weather hazard. The system is comprised of a display system coupled to a processor that is configured to retrieve weather information from a database and determine the severity of weather hazard present within a predetermined distance. The severity of the weather hazard is based on the phase of flight and type of weather hazards present within the weather envelope. The weather symbology that graphically represents the severe weather hazard within a weather envelope is rendered on the display.

## Description

### TECHNICAL FIELD

Embodiments of the subject matter described herein relate generally to avionics display systems. More particularly, embodiments of the subject matter described herein relate to a system and method for graphically displaying weather hazards in a perspective view.

### BACKGROUND

The National Transportation Safety Board (NTSB) conducted a study to determine why pilots fly into adverse weather. Over 50% of pilots interviewed indicated that the cause was a lack of appreciation or understanding of the weather conditions. This is due in part to the fact that existing cockpit display systems display weather information on two dimensional maps, (e.g. separate lateral and vertical maps) requiring a pilot to interpret the two views in order to visualize the nature of the weather hazard. In addition, there are situations where weather hazard information cannot be effectively depicted in orthographic views.

To assist pilots in overcoming the forgoing challenges, systems have been proposed for displaying weather in three-dimensions on a synthetic vision system (SVS). However, such systems typically utilize relatively complex computational processes (e.g. matrix transformations, recursive algorithms, etc.) to render the three dimensional images. Consequently, this may take a considerable amount of time, which may be problematic when weather data changes rapidly. In addition, these systems and methods often clutter the display obscuring other important information from the pilot, such as terrain, traffic, ADS-B IN information, etc.

In view of the forgoing, it would be desirable to provide a system and method for displaying de-cluttered weather hazard symbology in a perspective view. This may allow the pilot to gain an appreciation for the type and location of the adverse weather and to minimize the risk of weather related aviation incidents.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

A method is provided for graphically displaying a weather hazard. The method comprises retrieving weather information from a database and determining the severity of a weather hazard present within a predetermined distance. Then the weather symbology graphically representative of the severe weather hazard within a weather envelope is rendered on a display.

Also provided is a method for graphically displaying weather hazards. The method comprises retrieving weather information from a database and determining the severity of weather hazards present within a predetermined distance based on a phase of flight and type of weather hazards. Then the weather symbology graphically representative of a plurality of severe weather hazards within a weather envelope are rendered on a display.

Furthermore, a system for graphically displaying weather hazards is provided. The system comprises a display system coupled to a processor that is configured to (1) retrieve weather information from a database; (2) determine severity of weather hazard present within a predetermined distance; and (3) render weather symbology graphically representative of severe weather hazard within a weather envelope on a display.

### BRIEF DESCRIPTION OF THE DRAWINGS

FIG. 1 is a block diagram of an information display system suitable for use in an aircraft in accordance with an embodiment;
FIG. 2 is an exemplary illustration of a graphical display comprising a navigational map and symbology in the flight path;
FIG. 3 is a graphical representation of weather hazards occurring at various altitudes in accordance with an exemplary embodiment.
FIG. 4 is an exemplary illustration of a graphical display comprising a navigational map and symbology depicting icing along the flight path;
FIGS. 5 and 6 illustrate weather symbols that may be used to depict various weather hazards in accordance with an exemplary embodiment; and
FIG. 7 is a flowchart for graphically displaying symbology representative of weather hazards in accordance with an exemplary embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description. Presented herein for purposes of explication is a certain exemplary embodiment of how weather information may be graphically displayed in a readily comprehendible manner. It should be appreciated that this explicated example embodiment is merely an example and a guide for implementing the novel display system and method for graphically displaying weather hazard symbology. As such, the examples presented herein are intended as non-limiting.

Techniques and technologies may be described herein in terms of functional and/or logical block components and with reference to symbolic representations of operations, processing tasks, and functions that may be performed by various computing components or devices. It should be appreciated that any number of hardware, software, and/or firmware components configured to perform the specified functions may realize the various block components shown in the figures. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

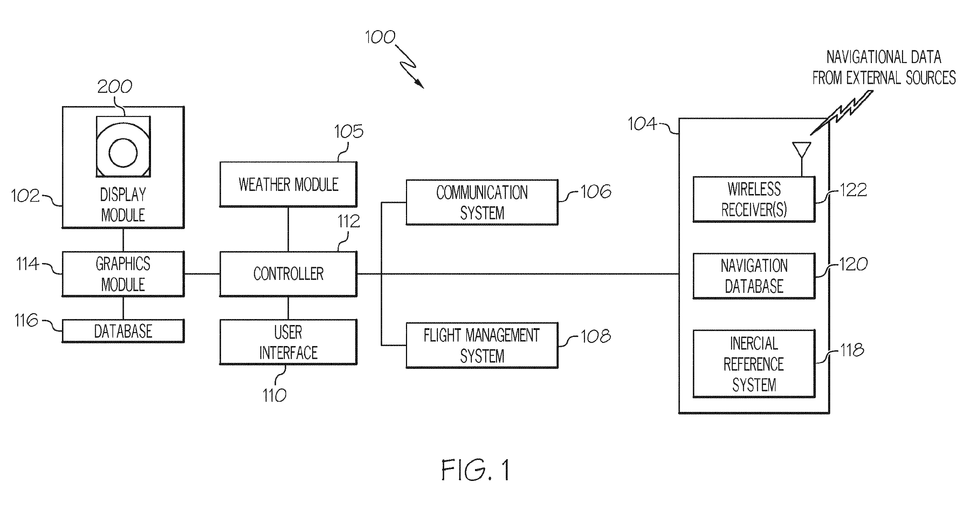

FIG. 1 depicts an exemplary embodiment of an aircraft display system 100. In an exemplary embodiment, the display system 100 includes, without limitation, a display device 102 for displaying a graphical flight plan image 200, a navigation system 104, a weather module 105, a communications system 106, a flight management system (FMS) 108, a controller 112, a graphics module 114, a user interface 110, and a database 116 suitably configured to support operation of the graphics module 114 and display device 102, as described in greater detail below. Navigation system 104 may include an inertial reference system 118, a navigation database 120 and one or more wireless receivers 122 for receiving navigational data from external sources in a well-known manner.

It should be understood that FIG. 1 is a simplified representation of a display system 100 for purposes of explanation and ease of description and is not intended to limit the application or scope of the subject matter in any way. In practice, the display system 100 and/or the aircraft will include numerous other devices and components for providing additional functions and features, as will be appreciated in the art. For example, the display system 100 and/or the aircraft may include one or more avionics systems (e.g., an air traffic management system, a radar system, a traffic avoidance system) coupled to the flight management system 108 and/or the controller 112 for obtaining and/or providing real-time flight-related information that may be displayed on the display device 102.

In an exemplary embodiment, the display device 102 is coupled to the graphics module 114. The graphics module 114 is coupled to the controller 112, and the controller 112 and the graphics module 114 are cooperatively configured to display, render, or otherwise convey graphical representations or images of weather symbols and flight plan information on the display device 102. As stated previously, navigational system 104 includes an inertial reference system 118, a navigation database 120, and at least one wireless receiver 122. Inertial reference system 118 and wireless receiver 122 provide controller 112 with navigational information derived from sources onboard and external to the host aircraft, respectively. More specifically, inertial reference system 118 provides controller 112 with information describing various flight parameters of the host aircraft (e.g., position, orientation, velocity, etc.) as monitored by a number of motion sensors (e.g., accelerometers, gyroscopes, etc.) deployed onboard the aircraft. By comparison, and as indicated in FIG. 1, wireless receiver 122 receives navigational information from various sources external to the aircraft. These sources may include various types of navigational aids (e.g., global position systems, non-directional radio beacons, very high frequency omni-directional radio range devices (VORs), etc.), ground-based navigational facilities (e.g., Air Traffic Control Centers, Terminal Radar Approach Control Facilities, Flight Service Stations, and control towers), and ground-based guidance systems (e.g., instrument landing systems). In certain instances, wireless receiver 122 may also periodically receive Automatic Dependent Surveillance-Broadcast (ADS-B) data from neighboring aircraft. In a specific implementation, wireless receiver 122 assumes the form of a multi-mode receiver (MMR) having global navigational satellite system capabilities.

Navigation database 120 includes various types of navigation-related data stored therein. In a preferred embodiment, navigation database 120 is an onboard database that is carried by the aircraft. The navigation-related data includes various flight plan related data such as, for example, and without limitation: locational data for geographical waypoints; distances between waypoints; track between waypoints; data related to different airports; navigational aids; obstructions; special use airspace; political boundaries; communication frequencies; and aircraft approach information. The navigation system 104 is also configured to obtain one or more navigational parameters associated with operation of the aircraft. The navigation system 104 may be realized as a global positioning system (GPS), inertial reference system (IRS), or a radio-based navigation system (e.g., VHF Omni-directional radio range (VOR) or long range aid to navigation (LORAN)), and may include one or more navigational radios or other sensors suitably configured to support operation of the navigation system 104, as will be appreciated in the art. In an exemplary embodiment, the navigation system 104 is capable of obtaining and/or determining the instantaneous position of the aircraft, that is, the current location of the aircraft (e.g., the latitude and longitude) and the altitude or above ground level for the aircraft. The navigation system 104 may also obtain and/or determine the heading of the aircraft (i.e., the direction the aircraft is traveling in relative to some reference).

Controller 112 is coupled to the navigation system 104 for obtaining real-time navigational data and/or information regarding operation of the aircraft to support operation of the display system 100. The communications system 106 is also coupled to the controller 112 and configured to support communications to and/or from the aircraft, as is appreciated in the art. The controller 112 is coupled to the flight management system 108, which in turn, may also be coupled to the navigation system 104 and the communications system 106 for providing real-time data and/or information regarding operation of the aircraft to the controller 112 to support operation of the aircraft. In addition, a weather module 105 is coupled to the controller 112, and utilizes data gathered from the navigation system 104 to graphically generate symbology that represents the weather hazards along the flight path. Furthermore, the user interface 110 is coupled to the controller 112, and the user interface 110 and the controller 112 are cooperatively configured to allow a user to interact with display device 102 and other elements of display system 100, as described in greater detail below.

In an exemplary embodiment, the display device 102 is realized as an electronic display configured to graphically display flight information, weather information, and/or other data associated with operation of the aircraft under control of the graphics module 114. In an exemplary embodiment, the display device 102 is located within a cockpit of the aircraft. It will be appreciated that although FIG. 1 shows a single display device 102, in practice, additional display devices may be present onboard the aircraft. The user interface 110 is also located within the cockpit of the aircraft and adapted to allow a user (e.g., pilot, co-pilot, or crew member) to interact with the remainder of display system 100 and enables a user to select content displayed on the display device 102, as described in greater detail below. In various embodiments, the user interface 110 may be realized as a keypad, touchpad, keyboard, mouse, touch screen, joystick, knob, microphone, or another suitable device adapted to receive input from a user. In preferred embodiments, user interface 110 may be a touch screen, cursor control device, joystick, or the like.

In an exemplary embodiment, the communications system 106 is suitably configured to support communications between the aircraft and another aircraft or ground location (e.g., air traffic control). In this regard, the communications system 106 may be realized using a radio communication system or another suitable data link system. In an exemplary embodiment, the flight management system 108 (or, alternatively, a flight management computer) is located onboard the aircraft. Although FIG. 1 is a simplified representation of display system 100, in practice, the flight management system 108 may be coupled to one or more additional modules or components as necessary to support navigation, flight planning, and other aircraft control functions in a conventional manner.

The controller 112 and/or graphics module 114 are configured in an exemplary embodiment to display and/or render symbology on the display device 102 that is representative of the weather. This allows a user (e.g., via user interface 110) to gain a better understanding of an approaching weather hazard. In addition, the user can review various aspects (e.g., speed of the aircraft, estimated flight time, rates of ascent/descent, flight levels and/or altitudes, and the like) of the flight. The controller 112 generally represents the hardware, software, and/or firmware components configured to facilitate the display and/or rendering of a navigational map on the display device 102 and perform additional tasks and/or functions described in greater detail below. Depending on the embodiment, the controller 112 may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. The controller 112 may also be implemented as a combination of computing devices, e.g., a combination of a digital signal processor and a microprocessor, a plurality of microprocessors, one or more microprocessors in conjunction with a digital signal processor core, or any other such configuration. In practice, the controller 112 includes processing logic that may be configured to carry out the functions, techniques, and processing tasks associated with the operation of the display system 100, as described in greater detail below. Furthermore, the steps of a method or algorithm described in connection with the embodiments disclosed herein may be embodied directly in hardware, in firmware, in a software module executed by the controller 112, or in any practical combination thereof.

The graphics module 114 generally represents the hardware, software, and/or firmware components configured to control the display and/or rendering of a navigational map on the display device 102 and perform additional tasks and/or functions described in greater detail below. In an exemplary embodiment, the graphics module 114 accesses one or more databases 116 suitably configured to support operations of the graphics module 114, as described below. In this regard, the database 116 may comprise a waypoint database, required navigation performance (RNP) database, terrain database, a weather database, a flight plan database, an obstacle database, a navigational database, a geopolitical database, a terminal airspace database, a special use airspace database, or other information for rendering and/or displaying content on the display device 102, as described below. It will be appreciated that although FIG. 1 shows a single database 116 for purposes of explanation and ease of description, in practice, numerous databases will likely be present in a practical embodiment of the display system 100.

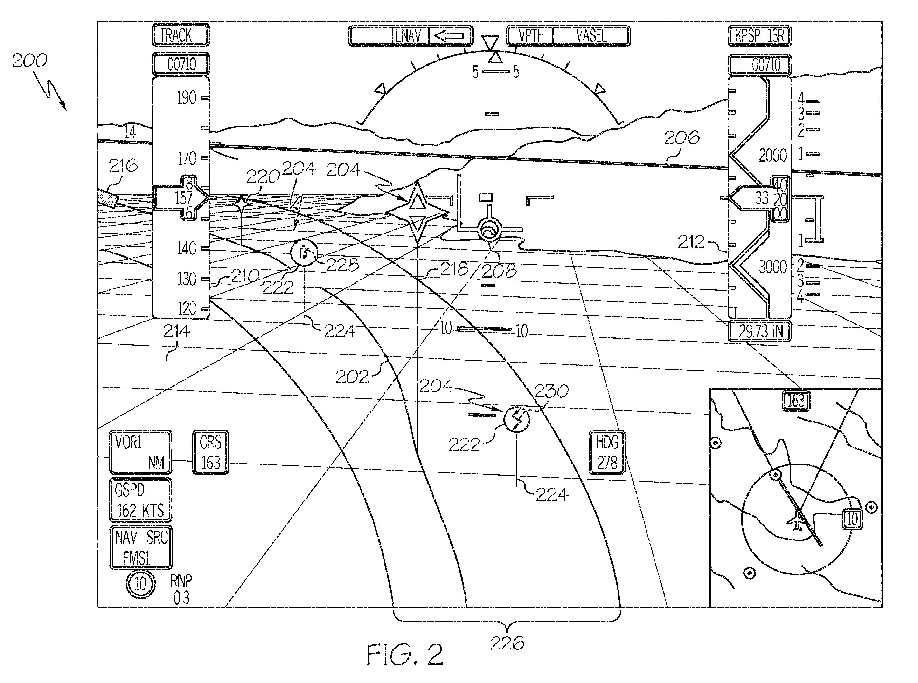

FIG. 2 is an exemplary visual display 200 that may be rendered by the aircraft display system 102 of FIG. 1. The display 200 selectively renders computer generated symbology representing a flight path 202 and weather symbology 204. In addition, the display 200 generates symbology representing a zero pitch reference line (e.g. commonly referred to as a horizon line) 206, a flight path marker (also known as a flight path vector or velocity vector) 208, an airspeed scale or tape 210, an altitude scale or tape 212, and terrain (e.g. identified generally as element 214). The terrain 214 can include any representation of the environment surrounding the aircraft, including flattened terrain as depicted in this embodiment. Additionally, the terrain 214 can include a virtual plane selected by a pilot at a certain elevation relative to the aircraft and rendered at that elevation. Although the display 200 is shown as an egocentric, first-person frame of reference, the display 200 can be a secondary, wingman, and/or plan or perspective view that enables a viewer to view the aircraft, as well as zoom in and out, including an unmanned vehicle and/or spacecraft. Although the display 200 is generally associated with a Primary Flight Display, the display can also be utilized on a multi-function display, head up display, and/or a head mounted display.

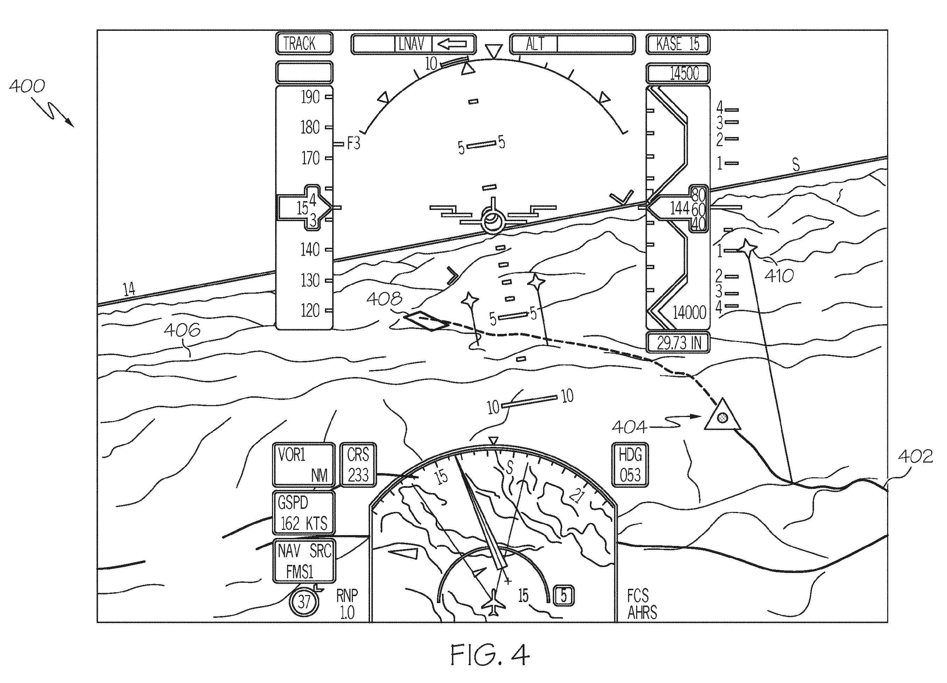

The flight path 202 may be graphically represented on the display 102 (FIG. 1) as a line from the current position of the aircraft to a predetermined area. The graphical representation of the flight path 202 is generated from signals provide by the flight management system 108 (FIG. 1). As shown in FIG. 2, the flight path 202 curves around to the left, thereby indicating the specific path of the aircraft to a landing area 216. Waypoints (e.g. 218 and 220) may be shown along the flight path 202. The waypoints may be utilized to indicate the flying altitude of the aircraft along the flight path 202. For example, waypoint 218 is at a lower altitude than waypoint 220, indicating the aircraft is descending towards the landing area 216. Although the flight path 202 is rendered as a line, alternate depictions may be suitable as will be further discussed in connection with FIG. 4.

A graphical representation of a weather hazard may be rendered on display 102 (FIG. 1) by weather symbology 204. The weather symbology 204 may be displayed as a part of a waypoint (e.g. as shown by waypoint 218), or may be displayed between waypoints (e.g. as shown by weather symbol 222 location between waypoints 218 and 220). The weather symbology 204 is generated from current real-time weather data gathered from sources (e.g. XM satellite based receivers, ground stations, and/or onboard radars) and are compiled by the weather module 105 (FIG. 1) to generate weather symbology 204 within a weather envelope 226 of the aircraft. The weather envelope 226 is defined by a lateral distance from the flight path. This distance may be set equal to the required navigation performance (RNP) width or may be set by the pilot. RNP refers to nautical distance in miles in a circular radius from the aircraft. For example, an RNP of 10 means a circular distance of ten miles from the aircraft. Different airspaces the aircraft may enter may have different RNP requirements, some oceanic airspace have an RNP of four, while landing approach paths may have an RNP of one tenth. The pilot may reduce the weather envelope in severe weather, which may decrease the number of weather symbols that are displayed to de-clutter the display. In addition, the pilot may increase the weather envelope, to gain a better understanding of the surrounding weather hazards.

In addition, only the most severe weather symbols within a predetermined distance inside the weather envelope 226 will be displayed in order to de-clutter the visual display 200. The weather module 105 (FIG. 1) accomplishes this by weighing the severity of each weather hazard in relation to the phase of the flight. The flight of the aircraft may be split into multiple different phases, for example takeoff, below 10,000 feet, above 10,000 feet, approach, and landing. For example, winds are weighted more heavily during takeoff/landing phases, since the presences of strong winds could cause flight incidents. If other weather hazards are present within the weather envelope and are not displayed, the symbology that is graphically represented may be altered (i.e. solid line, dashed line, colored line, highlighted line, etc.) to warn the pilot that other weather hazards may be present. In addition, the pilot may set the predetermined spacing between weather symbols to ensure a limited number of weather symbols are displayed at any time. Furthermore, the pilot may refer to the multi-functional display (MFD) to view additional details about all-weather hazards.

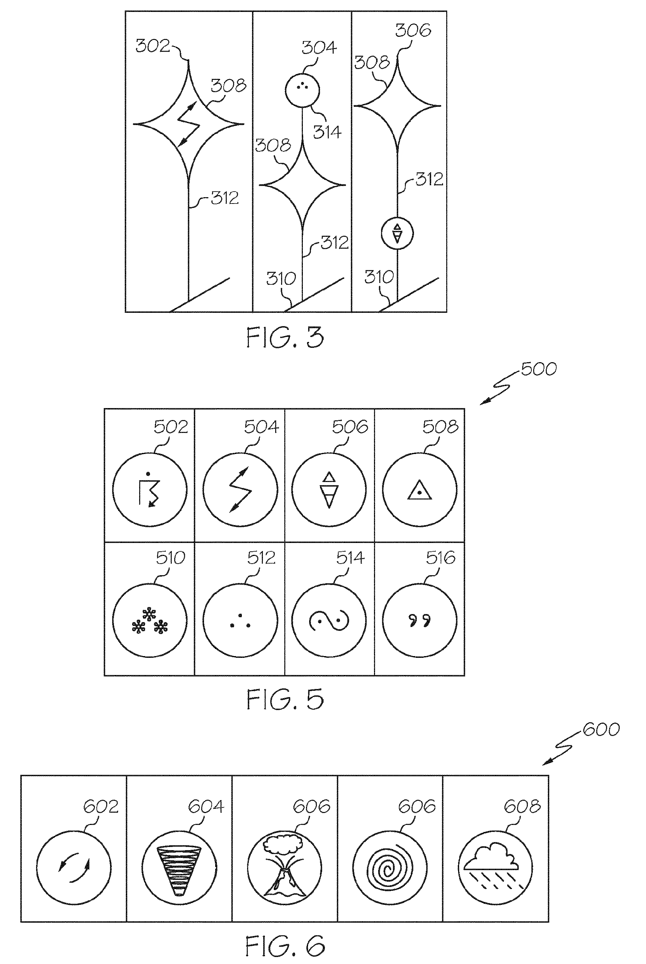

The weather symbology 204 is comprised of a weather symbol 222 and a tether line 224. The weather symbol 222 indicates to the user the type of weather condition. The meaning of each weather symbol 222 will be discussed in greater detail in connection with FIGS. 5 and 6. The tether line 224 indicates to the user the minimum and maximum altitudes of the weather hazard. In one embodiment, the weather symbol 222 is placed at the central point of the tether line 224 to illustrate where the weather hazard may be the most severe. For example, the thunderstorm symbol 228 is placed in the middle of the tether line 224. The weather symbology 204 may increase the situational awareness of the pilot by indicating the type and altitude range of the weather hazards in a readily comprehensible manner.

In an alternative embodiment, the weather symbol 222 may be graphically rendered on display 102 (FIG. 1) at the minimum or maximum altitude of the weather hazard. The weather symbol 222 may be rendered below the flight altitude symbol (e.g. displayed as a star, diamond, or any other suitable shape) 308, if the waypoint altitude 312 is above the maximum altitude of the weather hazard. Alternatively, the weather symbol 222 may be rendered above the flight altitude symbol 308, if the waypoint altitude 312 is below the minimum altitude of the weather hazard. For example, the altitude of the flight path shown in FIG. 2 is approximately 3,320 feet, as shown by the altitude scale or tape 212 and the maximum altitude of the weather hazard is at a lower altitude. Thus, the lighting symbol 230 is rendered above the tether line 224. This permits the pilot to efficiently interpret the type and altitude of weather hazards that are closest to the flight path.

FIG. 3 is a graphical representation of weather symbology for indicating weather hazards occurring at various altitudes in comparison to the planned flying altitude of the aircraft in accordance with an exemplary embodiment. The waypoint symbols 302, 304, and 306 display a flight altitude symbol 308 coupled to a flight path 310 by a vertical line 312. Once again, it should be appreciated that the symbol could have any shape that suitably represents the planned flying altitude of the aircraft at the location of that individual waypoint. Referring to waypoint 302, the symbol shown inside the flight altitude symbol 308 depicts a lightning storm centered in the flight path at the planned flying altitude of the aircraft. From this information the pilot can make an informed decision as whether to continue flying into the center of the storm or to alter the current flight plan. In addition, the weather symbols shown in connection with waypoints 304 and 306 illustrate how the weather symbols may be placed at heights to represent the central point of the weather hazards. For example, the weather symbol 314 is attached to a waypoint 304 indicating that a rain hazard is centered in the flight path and the altitude of the central point of the rain hazard is at an altitude higher than the flight path. This is shown by placing symbol 304 above the flight altitude symbol 308. Overall, this permits the pilot to further appreciate or gain a better understanding of the current weather hazards.

FIG. 4 is an exemplary illustration of graphical display comprising a navigational map and symbology depicting icing along the flight path. The display 400 selectively renders symbology representing flight path 402 and weather symbology 404 that may enhance the situational awareness of the flight crew. The terrain symbology 406 can include any representation of the environment surrounding the aircraft, including a three-dimensional, perspective view as depicted in this embodiment. As shown in FIG. 4, the flight path 402 curves to the left before approaching a landing area 408. If a weather hazard is present in the flight path over an extended predetermined distance, the weather module 105 (FIG. 1) may alter the graphical depiction of the flight path. For example, the graphical depiction of the flight path 202 (FIG. 2) is altered from a continuous line (as shown in FIG. 2) to a dashed line to indicate the presents of a weather hazard over an extended predetermined distance. For example, FIG. 4 illustrates an icing weather hazard located in the flight path over an extended distance. This is shown by placing the icing weather symbol 412 at the location the aircraft will first encounter the weather hazard. The flight path 402 is then altered to a non-continuous line from the location of the weather symbol 412 to a landing area 408. It should be appreciated that all weather hazards that present over an extended predetermined distance may alter the graphical representation of the flight path. The length of the extended predetermined distance may be set by the designer or the pilot. In addition, the flight path information 402 may be altered to any suitable alternative, such as, a dashed line, colored line, checkered line, varying weights/pattern lines, highlighted line, etc. to depict the presents of a weather hazard.

The flight path 402 and weather symbology 404 may be traced along the terrain 406 to provide a more convenient and intuitive display of the flight path. In contrast to some conventional displays, the flight path 402 and weather symbology 404 does not clutter the display, obscuring other information from the pilot, such as terrain, traffic, ADS-BIN information, etc. In addition, the flight path 402 and/or weather symbology 404 can be selectively displayed, for example, as desired by the pilot and/or as a function of flight conditions. For example, the flight path 402 can appear when the direction of the flight path changes, when the aircraft is significantly off of the intended flight plan, during approach, and/or at low altitudes. Additionally, the weather symbology 404 may be displayed if the current weather conditions change or increase in severity.

FIGS. 5 and 6 are tables of weather symbols that may be used to depict various weather hazards in accordance with an exemplary embodiment. Referring to FIG. 5, table 500 contains examples of symbols to represent weather hazarders such as thunderstorms 502, lightning 504, hail 506, icing 508, snow 510, rain 512, frozen rain 514, and drizzle 518. In the different embodiments described above, these symbols may take the form of solid filled figures, become part of the flight path, or may include additional or fewer features than those illustrated. Referring now to FIG. 6, table 600 provides examples of symbols that represent weather hazards such as, convection 602, cyclones/tornado 604, volcanic ash 604, hurricanes 606, and precipitation 608.

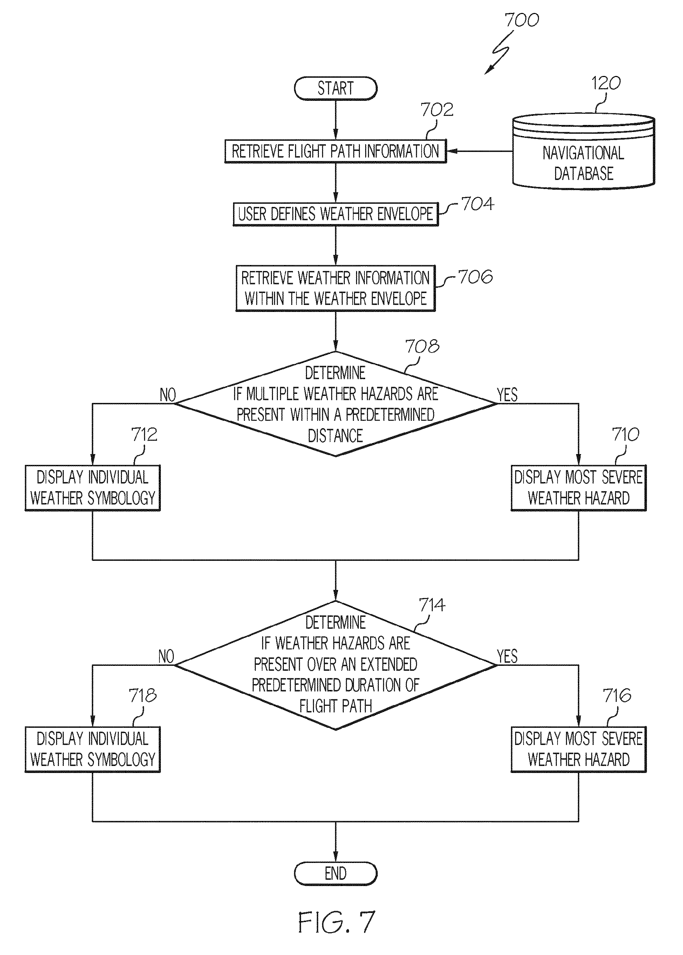

FIG. 7 is a flowchart of a method for graphically displaying symbology in accordance with an exemplary embodiment. In STEP 702, the flight path information is received from the navigational database 120 (FIG. 1). The user defines the weather envelope by either selecting the required navigation performance width or by defining a custom lateral distance from planned flight path where the flight path denotes the flight plan or the current/actual trajectory. (STEP 704). The weather information within the weather envelope is retrieved in STEP 706. In STEP 708, the weather module determines if multiple weather hazards are present within a predetermined distance. If there are multiple weather hazards within the predetermined distance, only the symbology that represents most severe weather hazard will be displayed (STEP 710); otherwise, the individual weather symbols will be displayed (STEP 712). In addition, the weather module determines if the weather hazard is present over an extended predetermined distance of the flight path in STEP 714. If the weather hazard is present over the extended predetermined distance of the flight path, then the flight path information is altered on the display (STEP 716); however, if not then the weather symbols will be displayed (STEP 718).

Thus, there has been provided a novel system and method for displaying de-cluttered weather hazard symbology in a perspective view. This may allow the pilot to gain an appreciation for the type and location of the adverse weather hazards. The pilot then may make an informed decision about the flight path to follow to minimize the risk of a weather related aviation accident.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for graphically displaying weather hazards on an aircraft display, the method comprising:
retrieving weather information from a database;
determining severity of a weather hazard present within a predetermined distance; and
rendering weather symbology graphically representative of the severe weather hazard within a weather envelope on a display.

2. The method of Claim 1 further comprising setting the boundaries of the weather envelope to correspond to a required navigation performance.

3. The method of Claim 1 further comprising setting the boundaries of the weather envelope to a predefined width selected by the user.

4. The method of Claim 1 further comprising basing the severity of the weather hazard on a phase of flight and type of weather hazards.

5. The method of Claim 1 further comprising altering the visual representation of the weather symbology to indicate a plurality of weather hazards.

6. The method of Claim 1 further comprising altering the format of a visual representation of a flight path to a second visual representation if a weather hazard exists over an extended predetermined distance.

7. The method of Claim 1 further comprising displaying the weather symbology comprised of a weather symbol and a tether line.

8. The method of Claim 7 further comprising rendering the weather symbol at the mean altitude of the weather hazard.

9. The method of Claim 1 further comprising displaying waypoint comprised of a flight altitude symbol and a tether line.

10. The method of Claim 9 further comprising:
rendering the weather symbol below the flight altitude symbol if the flight altitude symbol is displayed at a higher altitude then the maximum altitude of the weather hazard.
rendering the weather symbol above the flight altitude symbol if the flight altitude symbol is displayed at a lower altitude then the maximum altitude of the weather hazard.
